# EUROPEAN PATENT SPECIFICATION

(11) **EP 4 136 373 B1**
(45) Date of publication and mention of the grant of the patent: **10.04.2024**
(21) Application number: 21725997.7
(22) Date of filing: 17.04.2021
(51) Int. Cl.: F16K 31/08, A47L 15/42, D06F 39/08, E03B 7/07, F16K 31/00

(54) **ANTI-FLOODING HOSE WITH SAFETY VALVE FOR LIQUIDS**
LECKVERHINDERUNGSSCHLAUCH MIT SICHERHEITSVENTIL FÜR FLÜSSIGKEITEN
TUYAU ANTI-INONDATION AVEC SOUPAPE DE SÉCURITÉ POUR LIQUIDES

(30) Priority: 17.04.2020 IT 202000008281
(43) Date of publication of application: 22.02.2023
(73) Proprietor: Seprio Plast ZN S.r.l., 21049 Tradate (VA) (IT)
(72) Inventor: ZORZI, Roberto, 21040 Venegono Superiore (IT)
(74) Representative: Gasparini, Alberto
(86) International application number: PCT/IT2021/050116
(87) International publication number: WO 2021/210035

(56) References cited:
- WO-A1-2020/012517
- BE-A6- 1 002 481
- DE-A1- 4 402 913
- DE-U1- 8 405 924
- US-A- 3 233 625

## Description

### Field of application

The present invention relates to an anti-flooding hose with safety valve for liquids, i.e., a mechanical valve for liquids connected to an anti-flooding duct which, being made in the opening condition, is automatically closed following the action of a water leak, as known, in the safety hose outside the pressurized hose, due to the action of the liquid which is collected in the outer safety hose where the valve is positioned. The water supply hose is used in the connection to the water mains of appliances such as washing machines or dishwashers and the association of the hose and the safety valve occurs, as is known, with an outer hose to obtain the safety gap.

### Background Art

The combination of a safety valve and an anti-flooding duct, as known, comprises an inner pressurized water supply hose and an outer hose to collect any leaks from the pressurized hose, and at the inlet end of the pressurized water it has the valve for conditionally blocking the water supply in the presence of flooding of the outer hose.

The state of the art comprises safety valves for fluids already associated with a duct with pressurized water and outer safety hose as described in document IT 1312179 B in which the shutter of the safety valve is paired with a first permanent magnet which, when opposite a corresponding second permanent magnet with reverse polar arrangement, is kept in opening. The second magnet is associated with a movable element in the base of the safety valve which, in turn, is displaced from the assembly position after the flooding of the outer hose: the moving force of the movable element is obtained with a swellable sponge which, obviously, in the event of flooding, moves the movable element so as to cause the opposing magnetic fields of the two magnets to be out of alignment. The effect is to free the position of the two magnets and, also due to the rotation of the second magnet when the movable element moves, the first magnet is no longer hindered in moving; on the contrary, the rotated magnetic field of the second magnet attracts it and releases the shutter of the safety valve which closes, due to the water pressure in the supply duct, blocking the flooding.

The prior art also comprises WO 2020012517 A1 in which a further embodiment of an anti-flooding duct with safety valve is described comprising an inner pressurized water supply hose; an outer safety hose coaxial to the inner hose for the entire length of the inner hose and has, between the attachment of the water distribution hose, the pressurized hose and the outer safety hose a safety valve with permanent magnet sliding outside the valve body in a direction parallel to the valve body duct; the magnetic action constantly acts on a shutter body made of ferromagnetic material and sliding inside said valve body; the valve is made open in construction and kept open by an element of the outer safety house which is sensitive to flooding; the sensitive element comprises at least one sponge sensitive to water to define the position of the shutter in a certain manner while maintaining the opening of the safety valve, by the magnetic action of the permanent magnet; said magnet is made movable on a movable element, parallel to the valve body following the action of the sponge sensitive to water; the valve body is made of non-ferromagnetic material and the coaxial space between said inner supply hose and the outer safety hose is in hydraulic connection with a housing gap of said swellable sponge; even after the closing action the shutter continues to be kept in the closed position by the magnetic field coming from the outer magnet.

Moreover, all these valves include obtaining the movement of the sliding shutter inside the valve body following the action movement of the magnetic field between the magnet and the ferromagnetic shutter, as mentioned the movement action of the interaction of the mutual magnetic field causes the intervention in closing the valve, but the intervention itself is obtained by shutter movements for which the parts forming it are complex and expensive to make, i.e., in the movement of the magnets of the prior IT 1312179 B, or of the inner conformation of the valve body to make said movement effective and its constant maintenance of the closure with magnetic interaction in the prior WO 2020012517 A1, thus introducing a strong insecurity on the maintenance of the closing position of the pressurized water supply.

Said valves, when used in environments where space is not a limit, do not present problems of use, but the need to simplify their constitution and achieve very limited radial dimensions makes the solutions indicated above inappropriate in the production of anti-flooding valves and hoses which are economically advantageous and still effective.

Moreover, when the safety valve is closed, it must correspond to a safe closing position over time of the valve in any position where the anti-flooding hose has been installed and also in the presence of a lack of water supply pressure, which may occur, but must not allow the reopening of the safety valve.

Furthermore, these valves, having to be suitable for operating the shutter closing intervention even with different activation means, without having to make a valve body or other significantly expensive parts, specific to the different application and the different mode of activation of the closure intervention, are unsuitable as they cannot be designed for a double intervention mode, i.e., in obtaining the movement of the magnets and, therefore, the closure of the valve and the water supply.

Finally, a further limitation of the prior art is found in the cost of making said safety valves for supplying pressurized water. In fact, the complex intervention mechanisms on the shutter generate non-linear movements of the actuating members and require the production of components of different parts and sized for the specific movement of the actuating member, even using the simplest means such as dry sponges, i.e., which expand with water, or even expanded, which soften with water, allowing the action on the shutter. In this case, a targeted simplification would significantly reduce costs and maintain the effectiveness of the shutter closure and its safe position even under adverse assembly or operating conditions.

This state of the art is susceptible to considerable improvement with regard to the possibility of making an anti-flooding hose with safety valve for liquids which overcomes the aforementioned limits of the prior art and makes a very small, less expensive to obtain and easier to assemble conformation feasible.

Therefore, the technical problem underlying the present invention is that of making an anti-flooding hose with safety valve for liquids, i.e., a safety valve with conformation of the interaction mechanism between the valve shutter and the movable intervention element which is subject to the effect of water flooding the outer safety hose while maintaining the position unchangeable after the closing intervention.

In fact, more specifically, the anti-flooding hose must have a safety valve for liquids in which the movable element and its conformation after the closing intervention can no longer be subject to erroneous openings of the shutter due to gravity and/or lack of pressure in the water supply.

Furthermore, an improvement of the known technique is necessary in making a safety valve for liquids with anti-flooding hose in which, while maintaining a simplification of the constituent parts, they are interchangeable in the various versions of the intervention mechanism on the shutter, i.e., adapted to reduce the number of parts used for making different versions of safety valve and anti-flooding hose.

An inherent object of the previous technical problem is that of obtaining the assembly of the safety valve for liquids with an anti-flooding hose in an axial manner, i.e., in the direction parallel to the axis of the hose, the motion envisaged for the shutter and the water inside the valve body.

A further and not last object of the present invention is to make a safety valve for liquids in which the casing, which delimits the position of the valve, is contained in the outer safety hose or which has a maximum radial dimension equal to the threaded nozzle for attaching to the water mains, i.e., almost cylindrical.

### Summary of the Invention

This problem is solved, according to the present invention, by an anti-flooding hose comprising a safety valve for liquids in which the anti-flooding hose comprises: an inner pressurized water hose and an outer safety hose, coaxial to the inner hose for the entire length of the inner hose; the anti-flooding hose being connectable by an attachment to the water mains and being watertight towards the external environment up to an outlet end; the safety valve comprises a valve body, a shutter body in ferromagnetic material and a valve seat made in the coaxial valve body at said inner hose; the safety valve further comprises an outer permanent magnet, housed in a movable element, said movable element being sensitive to the flooding of a gap and hydraulically connected thereto; the movable element being positioned between the inner hose and the outer safety hose; the outer permanent magnet being made with magnetic interaction with said shutter body; furthermore, the anti-flooding hose being characterized by what said movable element is positioned and slides on said valve body between an opening position, defined in its manufacture, and a closing position; the movable element being sensitive to the flooding of said gap and in which the shutter body is held in the opening position with the precise positioning of the outer permanent magnet; said outer permanent magnet being housed on the movable element and the shutter body remains positioned for the magnetic interaction on an axial abutment, housed inside the valve body, against a thrust spring preloaded and housed coaxially with the axial abutment and the shutter body in the valve body.

In a further embodiment said axial abutment is made on a septum housed inside the valve body between the attachment to the water mains and the shutter body.

Moreover, in an improved embodiment the shutter body is made with a ferromagnetic ball and a double diameter gasket which covers the valve seat in which the ball engages.

Furthermore, in a further variant of the foregoing embodiments, the shutter body is made with a ball-shaped inner permanent magnet.

Moreover, in a specific perfected embodiment the movable element sensitive to the flooding of the gap consists of a dry, compressed sponge, which when moistened swells inside a cavity between the movable element and the valve body, moving the movable element and the outer permanent magnet associated thereto by the construction condition.

Furthermore, in a different embodiment the movable and flood-sensitive element of the gap comprises an annular membrane, housed in an annular cylinder and connected to the annular carriage to form the movable element; the membrane with water pushes inside the annular cylinder moving, in the direction axial to the valve body, the annular piston to which the annular carriage is associated, moving the carriage and the outer permanent magnet associated thereto.

Moreover, in a further construction variant the outer safety hose covers the entire valve body and forms a cylindrical protection to the safety valve; the hydraulic connection between the gap and the water-sensitive element occurs by clearance between the inner surface of the outer safety hose, corrugated, and the outer surface of the valve body.

Furthermore, in a preferred embodiment the outer safety hose is connected with the sleeve which has the hydraulic connection between the gap and the water-sensitive element by means of openings towards the annular cylinder and the annular membrane; a filtering membrane between the annular cylinder and the outside allows excess air to be vented from a slot in the sleeve.

Moreover, in a further embodiment the annular piston, the annular carriage and the outer permanent magnet are positioned by a load spring which prevents unwanted movements due to the non-vertical positioning of the safety valve.

Finally, in a preferred embodiment the valve body and the constituent parts of the safety valve are enclosed in a two-part cylindrical casing.

Further features and the advantages of the present invention, in making an anti-flooding hose with safety valve for liquids, will be manifest by the following description of constructive forms and embodiments, given by way of nonlimiting example, with reference to the five attached drawing tables.

### Detailed description of some preferred embodiments

Figure 1 depicts a schematic sectional view of a first embodiment of the anti-flooding hose and safety valve for liquids according to the invention: a valve body is completely contained in the outer safety hose which wraps both the safety valve and the inner pressurized hose with water; in the Figure the valve has the shutter in the open construction position subject to magnetic interaction with the outer magnet present on the movable element and with the dry sponge at the minimum assembly dimension;
- Figure 2 depicts a schematic sectional view of the first embodiment of Figure 1, here in the closing position after the flooding of the outer safety hose, the expanded dry sponge and the shutter closed with the thrust of the spring;
- Figure 3 depicts a schematic sectional view of the separated parts, as exploded, forming the complete valve of the first embodiment of Figures 1 and 2;
- Figure 4 depicts a schematic side view of a second embodiment of the safety valve for liquids, of the water-pressure activated membrane type, here without the outer protective casing;
- Figure 5 depicts a schematic side view of the second valve embodiment of Figure 4, rotated at a right angle;
- Figure 6 depicts a schematic sectional view of the separated parts, as exploded, forming the complete valve of the second embodiment of Figures 4 and 5; in this figure the two containment casings of the safety valve are depicted;
- Figure 7 depicts a schematic sectional view of the second embodiment of the liquid safety valve according to the invention: the valve body is completely surrounded by an annular piston with annular membrane activated by the water pressure; the valve has the shutter in the open construction position with the membrane and the annular piston in the original construction state with the shutter open in magnetic interaction with the outer permanent magnet;
- Figure 8 depicts a schematic sectional view of the second embodiment of Figures 4-7, here in the closing position after the flooding of the annular cylinder, the movement of the annular membrane and the closed shutter, moved by the thrust of the spring and no longer subject to the magnetic field of the outer magnet.

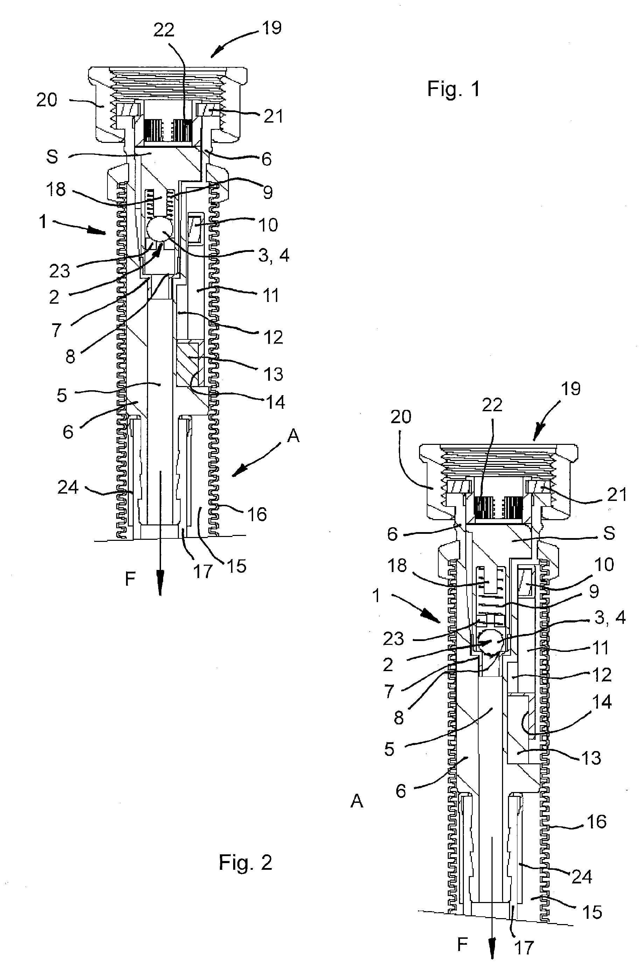

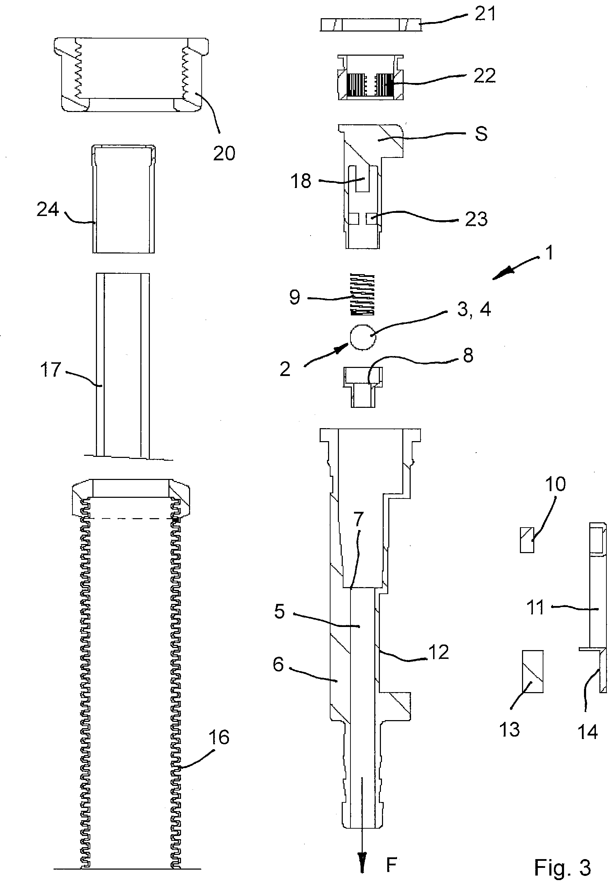

In Figures 1, 2 and 3 a first embodiment of a safety valve 1 is visible in which the shutter consists of a shutter body 2 and is made like a ball 3 in ferromagnetic material or an inner permanent magnet 4 in the form of a ball 3; the shutter body is placed inside a duct 5 of the valve body 6 with a conformation axial to the axis of the valve 1 itself, in the support position of the shutter the duct is restricted by the seat 7 of the valve provided with a double diameter gasket 8 on which the ball 3 of the shutter body 2 is pushed in closing by a loaded spring 9; the ball 3 is held in the opening position by the electromagnetic action exerted by an outer permanent magnet 10, held in position facing the position of the ball 3 of the shutter body 2 by a movable element 11 outside the valve body 6 and sliding on a guide 12; finally, in the constitution of the mechanism, on the opposite side of the outer permanent magnet 10 on the movable element 11 a dry sponge 13 is housed in a cavity 14 of the movable element 11, to push it, expanding, when lapped by the water present in the gap 15, between a corrugated outer safety hose 16 and an inner pressurized hose 17, in the opposite direction to the water flow F in the duct 5.

The ball 3 in ferromagnetic material, or also, advantageously, inner permanent magnet 4, is maintained by construction by the magnetic interaction of the position of the outer permanent magnet 10 against an axial abutment 18 present in a septum S in the valve body 6. The expansion of the dry sponge 13 moves the movable element 11 and, therefore, the outer permanent magnet 10 to a position where the magnetic interaction with the ball 3, forming the shutter body 2, is not very strong, also due to the stop in the axial direction to the direction F made by the axial abutment 18, which prevents the outer permanent magnet 10 from dragging the ball 3, i.e., the shutter body 2, or even the inner permanent magnet 4. Overcoming the magnetic interaction, the spring 9 pushes the ball 3, i.e., the shutter body 2 against the double diameter gasket 8 to occlude the seat 7 of the valve.

After closing, the safety valve 1 can no longer be reopened but must be replaced together with the anti-flooding hose A to which it is closely connected upon construction.

The body 6 of the safety valve 1 is completed by a usual connection 19 to the water mains with connection nozzle 20, by means of the usual annular gasket 21 and a filter 22 for particulates; between said filter 22 and the duct 5, inside the valve body 6, the septum S has inner slots 23 which allow the flow of water with the safety valve in the opening position; the valve body 6 ends towards the pressurized hose with the usual crimped ring 24 for fixing the inner pressurized hose 17 on the valve body.

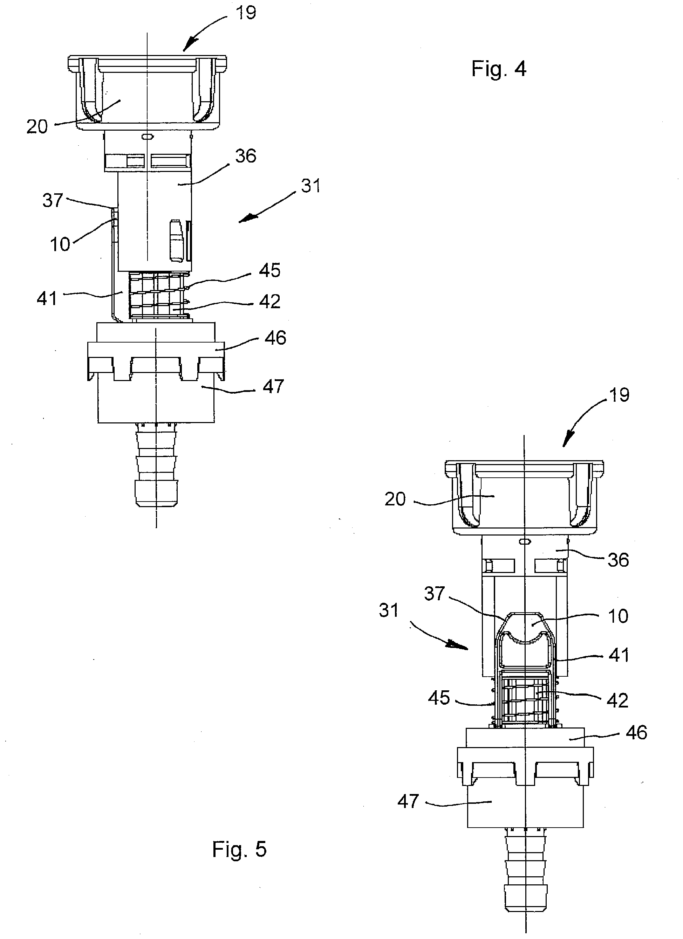

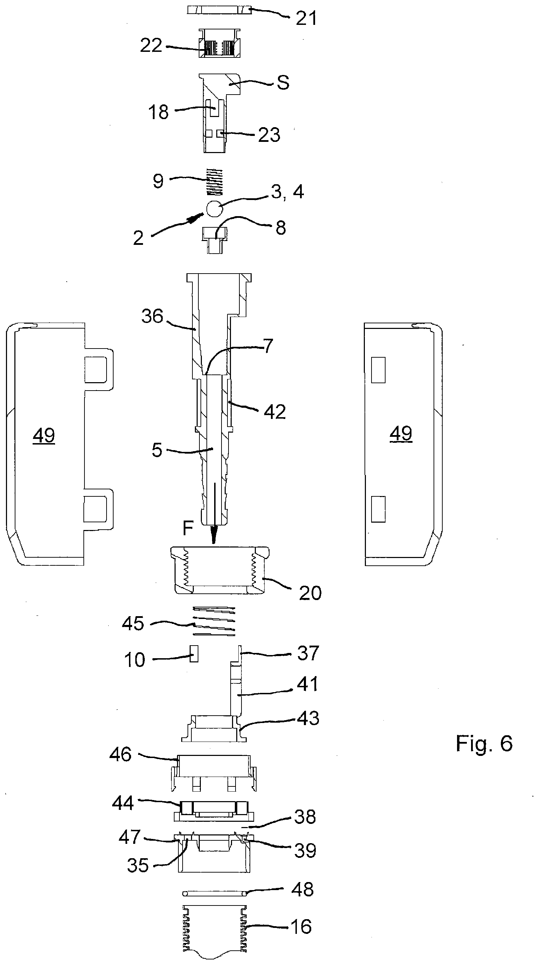

In Figures 4, 5, 6, 7 and 8 a second embodiment of the safety valve 31 is visible in which the parts equal or similar to the first embodiment are mentioned with the same reference number.

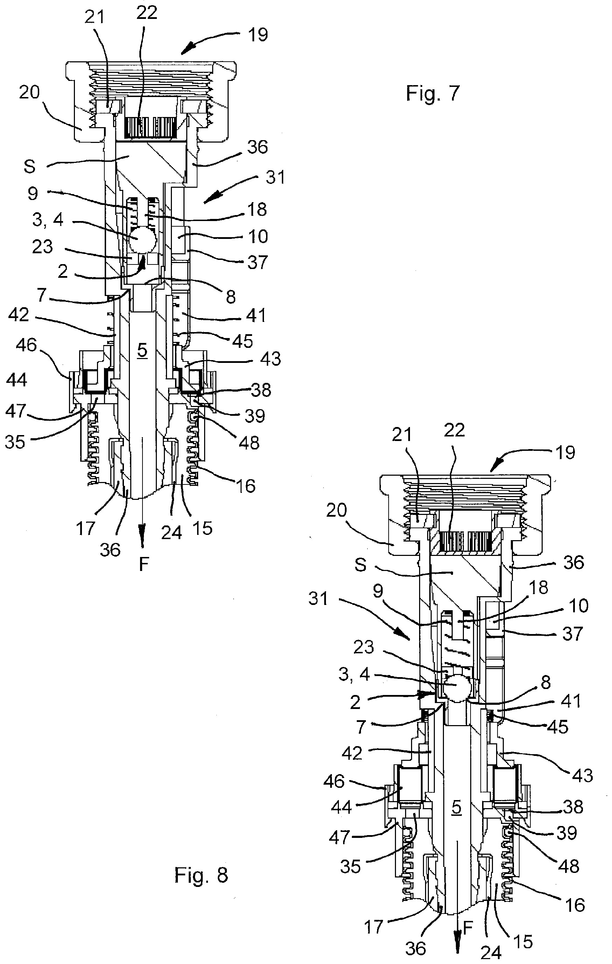

In it, the valve body 36 has a guide 42 of an annular carriage 41 with annular piston 43 and an annular membrane 44 contained between the annular piston and an annular cylinder 45. The outer permanent magnet 10 is connected to the end 37 of the annular carriage 41 opposite the annular piston 43, i.e., the annular carriage 41, in the mechanism of the second embodiment of the safety valve 31, replaces the movable element 11; a load spring 45 of the annular piston maintains the annular piston, the annular carriage to which it is connected and the outer permanent magnet 10 in the opening position of the safety valve 31, when there is no pressurized water inside the annular membrane so as to push the annular piston 43 and move it from the rest position, defined upon construction, Figure 7, to the extended position of the annular carriage 41 with annular piston, of Figure 8, i.e., with magnetic interaction with the shutter body 2, i.e., ferromagnetic ball 3 or inner permanent magnet 4, and thus allow the shutter body 2 to be closed after the thrust performed by the spring 9, similar to the first embodiment of the safety valve 1.

The corrugated outer safety hose 16 is fixed to a sleeve 47 of the annular cylinder 46 to which it is connected by a usual inner ring 48, moreover, openings 35 in said sleeve 47 allow the communication between the gap 15 and the annular membrane 44 acting on the annular piston 43 and therefore on the annular carriage 41 with the outer permanent magnet 10.

Upon construction the gap 15 is obviously full of air and with the eventual flooding the air must be discharged, so through a filtering membrane 38 for aeriforms, housed in the surface of the sleeve 47 and on the side of the annular membrane 44, the air exits, i.e., it crosses the filtering membrane and exits the slot 39 towards the external environment, avoiding pressurizing the annular membrane in advance.

Finally, the safety valve 31 is enclosed between two casings 49, outside the valve body 36 with annular piston 43, firmly connected to each other upon assembly.

The assembly of the safety valve for liquids with anti-flooding hose in the various described embodiments occurs with the following composition steps of the parts.

In the first embodiment of the safety valve 1, Figures 1-3, the following are inserted in succession inside the valve body 6: the double diameter gasket 8, which is housed in the seat 7 of the valve, the ball 3, ferromagnetic, or as an inner permanent magnet 4, the spring 9 and the septum S; the movable element 11 is housed outside the valve body 6, with the outer permanent magnet 10 assembled, in the special guides 12 and correctly positioning the dry sponge 13 in the cavity 14; moreover, taking care to position the inner permanent magnet 10 in order to couple the shutter body 2, i.e., the ferromagnetic ball 3 or the inner permanent magnet 4 by magnetic interaction, and position it against the axial abutment 18 with which the septum S is provided. Then outside the valve body the nozzle 20 and the components of the attachment 19 to the water mains are inserted: annular gasket 21 and filter 22. Finally, the inner pressurized hose 17 is assembled, crimped with the ring 24 on the valve body 6, concluding the assembly with the insertion of the corrugated outer safety hose 16, to define said containment gap 15 of any water leaks from the pressurized inner hose 17.

The second embodiment of the safety valve 31, Figures 4-8, is assembled similarly to the first embodiment for the inner part of the valve body 36 and differs in the assembly of the annular cylinder 46, the annular piston 43, the sleeve 47 and the annular membrane 44, to obtain the different motion actuations of the annular carriage 41 with annular piston. In the assembly of the annular carriage, in this embodiment, between the annular carriage 41 and the valve body 36, in the area of the guides 42 of the carriage, the load spring 45 is present with the function of maintaining the position of the annular carriage 41 also with the valve body 36 assembled in a different position from the vertical one illustrated in the Figures.

The advantages in using and assembling the anti-flooding hose with safety valve for liquids in the embodiments described herein are apparent when considering the minimum dimensions of each embodiment. The installation of the disclosed embodiments is independent with respect to the vertical position. In fact, the dry sponge 13, expandable, operates in any location, as well as the cylinder-piston-annular membrane, even when preloaded by the load spring 45, operates identically even if the valve 31 is installed in a position other than the vertical direction depicted. Furthermore, the closing action inside the valve 1 or 31 remains subject only to the presence or lack of magnetic interaction, between at least one permanent magnet and the shutter body 2 in ferromagnetic material or inner permanent magnet, and to the pushing action of the spring 9 on the shutter body 2.

Moreover, the one or more permanent magnets used can have a lower magnetic action, i.e., have a lower cost compared to the known art, since the mechanical closing action inside the valve body is ensured by the thrust of the spring 9, so the maximum magnetic interaction necessary is limited to the positioning force of the ball 3 of the shutter body 2 against the stop relief 18, depending on the mass of the ball or shutter and the force at which the spring 9 is compressed. Furthermore, after closing, the mechanism described in the two embodiments cannot be reset, i.e., cannot be returned to the opening condition, since the movable element 11 or annular carriage 41 cannot recouple the ball 3 or the shutter with the magnetic action, given the very distant positioning of the shutter edge 8, i.e., of the ball 3 and the shutter body subjected to the thrust of the spring 9, in order to be repositioned in the open valve condition depicted.

Finally, the creation and assembly of the two described embodiments allow a considerable limitation of the number of components, their difficulty of creation and, even more so, given the general action with axial assembly motion, also an automation of the assembly of the individual parts and/or sub-assemblies described. I.e., the safety valves described here make it extremely easy and economical to manufacture and assemble them, ensuring in any case the correct operation of the anti-flooding hose with safety valve for liquids described.

Obviously, a person skilled in the art, in order to satisfy specific and contingent requirements, may make numerous modifications to an anti-flooding hose with safety valve for liquids, as previously described, all nevertheless falling within the scope of protection of the present invention as defined by the following claims. In fact, although less conveniently, the shutter body can also be made in a shape different from a ball 3, but still in ferromagnetic material or even with an inner permanent magnet not in the form of a ball. Thus also the relief 18 can be made in a different way from what is depicted, so as to still obtain an axial stop against which to keep the shutter body 2 at rest.

## Claims

1. Anti-flooding hose comprising a safety valve for liquids, wherein the anti-flooding hose comprises: an inner pressurized water hose (17) and an outer safety hose (16), coaxial to the inner hose for the entire length of the inner hose (17); the anti-flooding hose being connectable by an attachment (19) to the water mains and being watertight towards the external environment up to an outlet end; the safety valve comprises a valve body (6), a shutter body (2) in ferromagnetic material and a valve seat (7) made in the valve body (6) coaxial to said inner hose (17); the safety valve further comprises an outer permanent magnet (10), housed in a movable element (11), said movable element being sensitive to the flooding of a gap (15) and hydraulically connected thereto; the movable element (11) being positioned between the inner hose (17) and the outer safety hose (16); the outer permanent magnet (10) being made with magnetic interaction with said shutter body (2); wherein said movable element (11) is positioned and slides on said valve body (6, 36) between an opening position, defined in its manufacture, and a closing position; the movable element (11) being sensitive to the flooding of said gap (15) and wherein the shutter body is held in the opening position with the precise positioning of the outer permanent magnet; said outer permanent magnet (10) being housed on the movable element (11), the anti-flooding hose being **characterized in that** the shutter body (2) remains positioned by the magnetic interaction on an axial abutment (18), housed inside the valve body (1, 31), against a thrust spring (9) pre-loaded and housed coaxially with the axial abutment (18) and the shutter body (2) in the valve body (6, 36).

2. Anti-flooding hose, according to claim 1, wherein said axial abutment is made on a septum (S) housed inside the valve body (6) between the attachment (19) to the water mains and the shutter body (2).

3. Anti-flooding hose, according to claim 1 or 2, wherein the shutter body (2) is made with a ball (3) of ferromagnetic material and a double diameter gasket (8) which covers the seat (7) of the valve in which the ball engages.

4. Anti-flooding hose according to claim 1 or 2, wherein the shutter body is made with an inner permanent magnet (4) in the form of a ball (3).

5. Anti-flooding hose, according to claim 1-4, wherein the movable and flood-sensitive element of the gap (15) consists of a dry sponge (13), compressed, which when moistened swells inside a cavity (14) between the movable element (11) and the valve body (6) moving the movable element and the outer permanent magnet (10) associated therewith by the construction condition.

6. Anti-flooding hose according to claim 1-4, wherein the movable and flood-sensitive element of the gap (15) comprises an annular membrane (44), housed in an annular cylinder (46) and connected to an annular carriage (41) to form the movable element (11); the water membrane pushes inside the annular cylinder moving, in a direction axial to the valve body (36), an annular piston (43) to which the annular carriage (41) is associated, moving the carriage (41) and the outer permanent magnet (10) associated therewith.

7. Anti-flooding hose, according to claim 1-5, wherein the outer safety hose (16) covers the entire valve body (6) and forms a cylindrical protection to the safety valve (1); the hydraulic connection between the gap (15) and the water-sensitive element occurs by clearance between the inner surface of the outer safety hose (16), corrugated, and the outer surface of the valve body (6).

8. Anti-flooding hose according to claim 6, wherein the outer safety hose (16) is connected with the sleeve (47) which has the hydraulic connection between the gap (15) and the water-sensitive element by means of openings (35) towards the annular cylinder (46) and the annular membrane (44); a filtering membrane (38) between the annular cylinder and the outside allows excess air to be vented from a slot (39) in the sleeve.

9. Anti-flooding hose according to claim 6, 8, wherein the annular piston (43), the annular carriage (41) and the outer permanent magnet (10) are positioned by a load spring (45) which prevents unwanted movements due to non-vertical positioning of the safety valve (31).

10. Anti-flooding hose according to one of claims 1-6, 8 and 9, wherein the valve body (36) and the constituent parts of the safety valve (31) are enclosed in a two-part cylindrical casing (49).

## Patentansprüche

1. Leckverhinderungsschlauch mit einem Sicherheitsventil für Flüssigkeiten, wobei der Leckverhinderungsschlauch umfasst: einen inneren Druckwasserschlauch (17) und einen äußeren Sicherheitsschlauch (16), der über die gesamte Länge des inneren Schlauchs (17) koaxial zum inneren Schlauch verläuft; wobei der Leckverhinderungsschlauch durch einen Anschluss (19) an die Wasserleitung anschließbar ist und bis zu einem Auslassende gegenüber der äußeren Umgebung wasserdicht ist; das Sicherheitsventil einen Ventilkörper (6), einen Verschlusskörper (2) aus ferromagnetischem Material und einen Ventilsitz (7) umfasst, der in dem Ventilkörper (6) koaxial zu dem inneren Schlauch (17) ausgebildet ist; das Sicherheitsventil ferner einen äußeren Permanentmagneten (10) umfasst, der in einem beweglichen Element (11) untergebracht ist, wobei das bewegliche Element auf das Fluten eines Spalts (15) anspricht und hydraulisch mit diesem verbunden ist; wobei das bewegliche Element (11) zwischen dem inneren Schlauch (17) und dem äußeren Sicherheitsschlauch (16) angeordnet ist; wobei der äußere Permanentmagnet (10) in magnetischer Wechselwirkung mit dem Verschlußkörper (2) steht; wobei das bewegliche Element (11) auf dem Ventilkörper (6, 36) zwischen einer Öffnungsposition, die bei seiner Herstellung definiert ist, und einer Schließposition positioniert ist und gleitet; wobei das bewegliche Element (11) auf das Fluten des Spalts (15) anspricht und wobei der Verschlusskörper durch die präzise Positionierung des äußeren Permanentmagneten in der Öffnungsposition gehalten wird; wobei der äußere Permanentmagnet (10) auf dem beweglichen Element (11) untergebracht ist,
wobei der Leckverhinderungsschlauch **dadurch gekennzeichnet ist, dass** der Verschlusskörper (2) durch die magnetische Wechselwirkung auf einem axialen Anschlag (18), der im Inneren des Ventilkörpers (1, 31) untergebracht ist, gegen eine Druckfeder (9) positioniert bleibt, die vorgespannt und koaxial mit dem axialen Anschlag (18) und dem Verschlusskörper (2) im Ventilkörper (6, 36) untergebracht ist.

2. Leckverhinderungsschlauch nach Anspruch 1, **dadurch gekennzeichnet, dass** der axiale Anschlag an einem Septum (S) erfolgt, das im Inneren des Ventilkörpers (6) zwischen dem Anschluss (19) an die Wasserleitung und dem Verschlusskörper (2) angeordnet ist.

3. Leckverhinderungsschlauch nach Anspruch 1 oder 2, wobei der Verschlusskörper (2) mit einer Kugel (3) aus ferromagnetischem Material und einer Dichtung (8) mit doppeltem Durchmesser versehen ist, die den Sitz (7) des Ventils abdeckt, in den die Kugel eingreift.

4. Leckverhinderungsschlauch nach Anspruch 1 oder 2, wobei der Verschlusskörper mit einem inneren Permanentmagneten (4) in Form einer Kugel (3) versehen ist.

5. Leckverhinderungsschlauch nach Anspruch 1 bis 4, wobei das bewegliche und flutungssensitive Element des Spaltes (15) aus einem trockenen, komprimierten Schwamm (13) besteht, der bei Befeuchtung in einem Hohlraum (14) zwischen dem beweglichen Element (11) und dem Ventilkörper (6) aufquillt und dabei das bewegliche Element und den ihm bauartbedingt zugeordneten äußeren Permanentmagneten (10) bewegt.

6. Leckverhinderungsschlauch nach Anspruch 1-4, wobei das bewegliche und flutungssensitive Element des Spaltes (15) eine ringförmige Membran (44) umfasst, die in einem ringförmigen Zylinder (46) untergebracht und mit einem ringförmigen Schlitten (41) verbunden ist, um das bewegliche Element (11) zu bilden; die Wassermembran drückt innerhalb des ringförmigen Zylinders und bewegt in einer Richtung axial zum Ventilkörper (36) einen ringförmigen Kolben (43), mit dem der ringförmige Schlitten (41) verbunden ist, wodurch der Schlitten (41) und der äußere Permanentmagnet (10), der damit verbunden ist, bewegt werden.

7. Leckverhinderungsschlauch nach Anspruch 1-5, wobei der äußere Sicherheitsschlauch (16) den gesamten Ventilkörper (6) überdeckt und einen zylindrischen Schutz für das Sicherheitsventil (1) bildet; die hydraulische Verbindung zwischen dem Spalt (15) und dem wasserempfindlichen Element erfolgt durch ein Spiel zwischen der Innenfläche des äußeren Sicherheitsschlauches (16), gewellt, und der Außenfläche des Ventilkörpers (6).

8. Leckverhinderungsschlauch nach Anspruch 6, wobei der äußere Sicherheitsschlauch (16) mit der Muffe (47), die die hydraulische Verbindung zwischen dem Spalt (15) und dem wassersensitiven Element hat, durch Öffnungen (35) zu dem ringförmigen Zylinder (46) und der ringförmigen Membran (44) hin verbunden ist; eine Filtermembran (38) zwischen dem ringförmigen Zylinder und der Außenseite ermöglicht die Entlüftung von überschüssiger Luft aus einem Schlitz (39) in der Muffe.

9. Leckverhinderungsschlauch nach Anspruch 6, 8, wobei der ringförmige Kolben (43), der ringförmige Schlitten (41) und der äußere Permanentmagnet (10) durch eine Lastfeder (45) positioniert sind, die unerwünschte Bewegungen aufgrund einer nicht vertikalen Positionierung des Sicherheitsventils (31) verhindert.

10. Leckverhinderungsschlauch nach einem der Ansprüche 1-6, 8 und 9, wobei der Ventilkörper (36) und die Bestandteile des Sicherheitsventils (31) von einem zweiteiligen zylindrischen Gehäuse (49) umschlossen sind.

## Revendications

1. Tube anti-inondation comprenant une soupape de sécurité pour les liquides, dans lequel le tube anti-inondation comprend : un tube interne d'eau sous pression (17) et un tube externe de sécurité (16), coaxial par rapport au tube interne sur toute la longueur du tube interne (17) ; le tube anti-inondation pouvant être raccordé par une fixation (19) au réseau d'eau et étant étanche à l'eau vers l'environnement externe jusqu'à une extrémité de sortie ; la soupape de sécurité comprend un corps de soupape (6), un corps d'obturateur (2) en matériau ferromagnétique et un siège de soupape (7) réalisé dans le corps de soupape (6) coaxial audit tube interne (17) ; la soupape de sécurité comprend en outre un aimant permanent externe (10), logé dans un élément mobile (11), ledit élément mobile étant sensible à l'inondation d'un espace (15) et raccordé, par voie hydraulique, à ce dernier ; l'élément mobile (11) étant positionné entre le tube interne (17) et le tube externe de sécurité (16) ; l'aimant permanent externe (10) étant réalisé avec l'interaction magnétique avec ledit corps d'obturateur (2) ; dans lequel ledit élément mobile (11) est positionné et coulisse sur ledit corps de soupape (6, 36) entre une position d'ouverture définie lors de sa fabrication, et une position de fermeture; l'élément mobile (11) étant sensible à l'inondation dudit espace (15) et dans lequel le corps d'obturateur est maintenu dans la position d'ouverture avec le positionnement précis de l'aimant permanent externe ; ledit aimant permanent externe (10) étant logé sur l'élément mobile (11), le tube anti-inondation étant **caractérisé en ce que** :
le corps d'obturateur (2) reste positionné par l'interaction magnétique sur une butée axiale (18), logée à l'intérieur du corps de soupape (1, 31), contre un ressort de poussée (9) pré-chargé et logé de manière coaxiale par rapport à la butée axiale (18) et au corps d'obturateur (2) dans le corps de soupape (6, 36).

2. Tube anti-inondation selon la revendication 1, dans lequel ladite butée axiale est réalisée sur un septum (S) logé à l'intérieur du corps de soupape (6) entre la fixation (19) au réseau d'eau et le corps d'obturateur (2).

3. Tube anti-inondation selon la revendication 1 ou 2, dans lequel le corps d'obturateur (2) est réalisé avec une bille (3) de matériau ferromagnétique et un joint à double diamètre (8) qui recouvre le siège (7) de la soupape dans laquelle la bille se met en prise.

4. Tube anti-inondation selon la revendication 1 ou 2, dans lequel le corps d'obturateur est réalisé avec un aimant permanent interne (4) se présentant sous la forme d'une bille (3).

5. Tube anti-inondation selon les revendications 1 à 4, dans lequel l'élément mobile et sensible à l'inondation de l'espace (15) se compose d'une éponge sèche (13) compressée qui, lorsqu'elle est humidifiée, gonfle à l'intérieur d'une cavité (14) entre l'élément mobile (11) et le corps de soupape (6) déplaçant l'élément mobile et l'aimant permanent externe (10) associé à ce dernier par la condition de construction.

6. Tube anti-inondation selon les revendications 1 à 4, dans lequel l'élément mobile et sensible à l'inondation de l'espace (15) comprend une membrane annulaire (44) logée dans un cylindre annulaire (46) et raccordée à un chariot annulaire (41) pour former l'élément mobile (11) ; la membrane avec l'eau pousse à l'intérieur du cylindre annulaire déplaçant, dans une direction axiale par rapport au corps de soupape (36), un piston annulaire (43) auquel le chariot annulaire (41) est associé, déplaçant le chariot (41) et l'aimant permanent externe (10) associé à ce dernier.

7. Tube anti-inondation selon les revendications 1 à 5, dans lequel le tube externe de sécurité (16) couvre tout le corps de soupape (6) et forme une protection cylindrique à la soupape de sécurité (1) ; le raccordement hydraulique entre l'espace (15) et l'élément sensible à l'eau a lieu par un jeu entre la surface interne du tube externe de sécurité (16) ondulé et la surface externe du corps de soupape (6).

8. Tube anti-inondation selon la revendication 6, dans lequel le tube externe de sécurité (16) est raccordé avec le manchon (47) qui a le raccordement hydraulique entre l'espace (15) et l'élément sensible à l'eau au moyen d'ouvertures (35) vers le cylindre annulaire (46) et la membrane annulaire (44) ; une membrane de filtration (38) entre le cylindre annulaire et l'extérieur permet l'évacuation de l'air en excès par une fente (39) dans le manchon.

9. Tube anti-inondation selon les revendications 6, 8, dans lequel le piston annulaire (43), le chariot annulaire (41) et l'aimant permanent externe (10) sont positionnés par un ressort de charge (45) qui empêche les déplacements indésirés dus au positionnement non vertical de la soupape de sécurité (31).

10. Tube anti-inondation selon l'une des revendications 1 à 6, 8 et 9, dans lequel le corps de soupape (36) et les parties constitutives de la soupape de sécurité (31) sont enfermés dans une enveloppe cylindrique en deux parties (49).
